# DEMANDE DE BREVET EUROPEEN

(11) **EP 4 491 323 A1**
(43) Date de publication de la demande: **15.01.2025**
(21) Numéro de dépôt: 24186068.3
(22) Date de dépôt: 02.07.2024
(51) Int. Cl.: B23P 19/00, B23P 19/04, F16B 5/06, B23P 19/10, B25J 17/02

(54) **TÊTE DE ROBOT POUR LE MONTAGE DE COMPOSANTS DE TYPE AGRAFE ET INSTALLATION DE MONTAGE DE COMPOSANTS DE TYPE AGRAFE**

(30) Priorité: 05.07.2023 FR 2307182
(71) Demandeur: Technovatis, 59136 Wavrin (FR)
(72) Inventeur: Delattre, Jean-Yves, 59134 Fournes-en-Weppes (FR)
(74) Mandataire: RVDB

(57) **Abrégé**

L'invention concerne une tête de robot (1) pour le montage de composants (2) comprenant une tête (10) configurée pour être engagée dans une encoche (5, 8) d'une zone d'engagement (4, 7) d'une pièce et un corps (9) configuré pour être engagé dans un support lors d'un agrafage ultérieur sur ce support, la tête (10) et le corps (9) s'étendant selon un premier axe (X1). La tête de robot (1) comprend un chargeur (12) de composants qui comprend un rail de stockage (14) configuré pour recevoir les têtes (10) d'une pluralité de composants (2) disposés l'un à la suite de l'autre, le chargeur (12) comprenant un tiroir (17) configuré pour extraire un à un les composants (2) du rail de stockage (14) et acheminer le composant extrait (2b) jusqu'à un organe de montage (13) qui comprend une zone de réception (40) du composant extrait (2b) et permet de pousser le composant extrait (2b) placé dans la zone de réception (40, 92, 93) lors d'un mouvement d'avance de la tête de robot (1) selon un second axe, jusqu'à ce que la tête (10) dudit composant extrait (2b) pénètre dans une encoche (5, 8) d'une zone d'engagement (4, 7) de la pièce (3), le second axe étant perpendiculaire au premier axe (X1) du composant extrait placé dans la zone de réception.

## Description

### Domaine technique

La présente invention concerne une tête de robot pour le montage de composants de type agrafe sur des pièces et une installation de montage de composants sur des pièces au moyen d'un robot équipé d'une telle tête de robot.

Les composants sont destinés à être mis en place par encliquetage sur des pièces fonctionnelles, elles-mêmes destinées finalement à être agrafées sur des supports. Pour cela, les composants comprennent une tête configurée pour être encliquetée sur la pièce fonctionnelle et un corps configuré pour être encliqueté sur le support lors de l'agrafage ultérieur de ladite pièce fonctionnelle. On entend par « fonctionnelle » le fait que la pièce peut remplir une fonction technique ou une fonction esthétique (habillage) une fois montée sur le support.

L'invention sera mise en oeuvre par les fabricants de dispositifs de distribution et de montage de composants. Elle trouvera son application par exemple chez les équipementiers, notamment dans le domaine automobile pour l'assemblage d'agrafes sur des pièces d'habitacle de véhicules, en vue de l'assemblage ultérieur de ces pièces d'habitacle sur des châssis de véhicules au moyen de ces agrafes.

### Etat de la technique

Dans le domaine de l'industrie automobile, en particulier, de nombreuses pièces fonctionnelles d'un véhicule sont fixées sur la structure du véhicule au moyen de composants du type agrafe. Pour cela, les agrafes sont prémontées sur les pièces fonctionnelles qui disposent sur leur face interne de zones d'engagement de ces agrafes, lesdites zones d'engagement étant encore dénommées des porte-agrafes. Les pièces fonctionnelles munies desdites agrafes sont ultérieurement fixées sur la structure du véhicule par encliquetage desdites agrafes sur la structure. Des installations permettent de réaliser le montage préalable des agrafes sur les pièces fonctionnelles.

Traditionnellement, de telles installations comprennent un dispositif de distribution en composants qui permet l'acheminement successif de composants jusqu'à une zone de sortie où le composant, en attente dans ladite zone de sortie, est saisi et/ou poussé pour être encliqueté sur une zone d'engagement agencée sur la face interne de la pièce fonctionnelle. Cette opération d'encliquetage du composant sur la pièce fonctionnelle peut être réalisée par un robot ou un système automatisé qui saisit le composant et vient le positionner et le monter en force sur la zone d'engagement de la pièce fonctionnelle, voire par un système à percussion qui pousse directement le composant afin de le monter en force sur ladite zone d'engagement.

Dans la demande de brevet publiée sous le numéro JP2015093348A, un robot comprend une tête de robot munie d'un embout de montage, de forme tubulaire, qui vient chercher un composant et le réceptionne par emboîtement sur le corps dudit composant, afin d'aller ensuite enclencher la tête de ce composant sur une zone d'engagement d'une pièce automobile. Le robot effectue donc des allers-retours entre un magasin externe qui alimente des composants jusqu'à une zone d'attente où l'embout de montage sur la tête de robot vient chercher un composant, et la pièce où le composant saisi par l'embout de montage est enclenché sur la zone d'engagement de la pièce grâce à un mouvement d'avance de la tête de robot, ladite tête de robot étant ensuite dégagée de la zone d'engagement de la pièce, permettant de déboîter le corps du composant, de l'embout de montage et de laisser à demeure le composant enclenché sur la pièce.

La demanderesse a déjà travaillé sur divers dispositifs de distribution de composants de type agrafe et sur divers dispositifs de montage de composants de type agrafe sur des pièces fonctionnelles, lesquels apparaissent dans les demandes de brevet publiées sous les numéros FR2933631A1, FR2962721A1, FR3004133A1, FR3004978A1, FR3029901A1, FR3042433A1 et FR3094254A1. Ces diverses conceptions de dispositifs de distribution de composants et de dispositifs de montage de composants de type agrafe permettent une réduction des coûts de fabrication et, en outre, une implantation directement sur les postes de travail d'une chaîne de montage ou d'une cellule de montage, en optimisant l'encombrement et la sécurité.

Parmi ces demandes de brevet précitées, la demande de brevet FR3004133A1 décrit un dispositif portatif comprenant un chargeur de composants qui comprend un rail de stockage configuré pour recevoir les têtes d'une pluralité de composants disposés l'un à la suite de l'autre. Les composants sont extraits un à un de la sortie du rail de stockage pour être acheminés directement jusqu'à une zone de réception d'un système de percussion muni d'un percuteur qui est activé pour pousser et dégager le composant de la zone de réception afin de l'enclencher sur une zone d'engagement d'une pièce. Un système de poussée présent sur le rail de stockage peut aider à diriger les composants à l'intérieur du rail de stockage, vers la zone de réception du système de percussion. Le dispositif portatif comprend deux poignées permettant de le saisir convenablement avec les deux mains afin de le manipuler et de venir engager un ou des composants sur une pièce. L'opérateur saisit donc le dispositif portatif avec les mains et le place sur la pièce en mettant convenablement en correspondance la zone de réception du système de percussion avec une zone d'engagement sur la pièce, puis active ledit système de percussion pour pousser le composant de la zone de réception à la zone d'engagement. Il recommence ensuite l'opération si plusieurs zones d'engagement sont présentes sur la pièce. Un défaut d'alignement de la zone de réception et de la zone d'engagement lors de l'activation du système de percussion peut engendrer un mauvais enclenchement du composant sur la pièce. En outre, durant l'activation du système de percussion, un temps d'arrêt du dispositif portatif est nécessaire pour garantir un positionnement convenable et une précision d'enclenchement du composant sur la zone d'engagement de la pièce.

Il est aussi connu des dispositifs de distribution de composants qui comportent un bol vibrant acheminant les composants jusqu'à une zone de sortie où les composants peuvent être saisis par un robot manipulateur ou un système manipulateur automatisé qui monte en force les composants directement sur des zones d'engagement de la pièce fonctionnelle.

Le temps d'encliquetage des composants sur les zones d'engagement des pièces fonctionnelles peut être important lorsque cette opération est réalisée par un robot manipulateur ou un système manipulateur automatisé qui prend les composants sur le dispositif de distribution de composants pour venir les encliqueter directement sur toutes les zones d'engagement de la pièce fonctionnelle.

Lorsque la pièce fonctionnelle dispose d'un nombre important de zones d'engagement de composants, le robot manipulateur ou le système manipulateur doit se réalimenter plusieurs fois en composants sur le dispositif de distribution de composants, ce qui augmente le temps de réalisation de l'opération de mise en place des composants sur la pièce fonctionnelle.

Entre outre, lors de la mise en place d'un composant sur la pièce fonctionnelle, un léger défaut de positionnement du composant par rapport à la zone d'engagement peut engendrer un effort plus important sur la pièce fonctionnelle pour parvenir à enclencher le composant dans la zone d'engagement, voire peut engendrer un défaut d'enclenchement du composant sur la pièce fonctionnelle. Le robot doit alors être dimensionné pour être capable d'exercer cet effort plus important. Ce léger défaut de positionnement du composant par rapport à la zone d'engagement peut provenir de plusieurs facteurs : la pièce fonctionnelle peut être légèrement déformée lors de sa fabrication, en particulier durant le refroidissement de la pièce fonctionnelle, engendrant des variations des positions des zones d'enclenchement sur la pièce fonctionnelle ; la pièce fonctionnelle peut également ne pas être positionnée convenablement sur le système de posage qui reçoit ladite pièce fonctionnelle avant la réalisation de l'opération d'enclenchement des composants sur les zones d'enclenchement respectives ; le bridage de la pièce fonctionnelle sur le système de posage peut aussi engendrer une déformation de celle-ci et, ainsi, des variations des positions des zones d'enclenchement sur la pièce fonctionnelle.

### Résumé de l'invention

La présente invention a pour objectif de pallier les inconvénients précités. Un premier objectif est d'optimiser le gain de temps de montage des composants sur les zones d'engagement d'une pièce au moyen du robot manipulant lesdits composants depuis un dispositif de distribution de composants qui alimente le robot en composants, jusqu'aux zones d'engagement sur la pièce, afin d'augmenter les cadences de montage. Un second objectif est de compenser les légers défauts de positionnement des composants par rapport aux zones d'engagement sur la pièce afin d'optimiser le taux d'enclenchement des composants sur les zones d'engagement de la pièce au moyen du robot et d'éviter les efforts sur la pièce et le robot.

L'invention porte sur une tête de robot pour le montage de composants du type agrafe sur une pièce. Le composant comprend une tête configurée pour être engagée dans une encoche d'une zone d'engagement de la pièce et un corps configuré pour être engagé dans un support lors d'un agrafage ultérieur sur ce support. La pièce peut être une pièce fonctionnelle destinée à être agrafée sur le support ultérieurement ; la pièce peut être aussi une tête de montage d'une installation de montage, telle que décrite dans la demande de brevet FR3094254A1, qui est configurée pour permettre un engagement du composant sur une pièce fonctionnelle destinée à être agrafée ultérieurement sur le support. La tête et le corps du composant s'étendent en longueur selon un premier axe.

Selon l'invention, la tête de robot comprend un chargeur de composants qui comprend un rail de stockage configuré pour recevoir les têtes d'une pluralité de composants disposés l'un à la suite de l'autre. De préférence, le rail de stockage est configuré pour recevoir entre cinq et vingt composants, d'autres quantités de composants - plus élevées ou moins élevées - restant envisageables. En outre, selon l'invention, le chargeur de composants comprend un tiroir configuré pour extraire un à un les composants du rail de stockage et acheminer le composant extrait jusqu'à un organe de montage. L'organe de montage comprend une zone de réception configurée pour recevoir ledit composant extrait. Par ailleurs, l'organe de montage est configuré pour pousser le composant extrait placé dans la zone de réception lors d'un mouvement d'avance de la tête de robot selon un second axe, jusqu'à ce que la tête dudit composant extrait pénètre dans une encoche d'une zone d'engagement de la pièce, le second axe étant perpendiculaire au premier axe du composant extrait placé dans la zone de réception.

Ainsi, la tête de robot permet avantageusement de monter rapidement des composants sur des zones d'engagement d'une pièce sans nécessité de déplacer et réalimenter en composants la tête de robot grâce à la capacité du rail de stockage du chargeur, ce qui permet d'obtenir une cadence de montage de composants sur une ou plusieurs pièces, très élevée. En outre, le montage de composants sur une pièce peut être réalisé en flux continu, c'est-à-dire sans temps d'arrêt de la tête de robot par rapport à la pièce lors de l'enclenchement d'un composant dans une zone d'engagement sur cette pièce, puisque l'enclenchement s'effectue grâce au mouvement de la tête de robot, et non au moyen d'un système de percussion tel que cela est le cas pour le dispositif portatif décrit dans la demande de brevet FR3004133A1, un tel système de percussion nécessitant un temps d'arrêt. La présence du tiroir permet en outre de déplacer un composant, du chargeur jusqu'à l'organe de montage, en temps masqué, pendant le déplacement de la tête de robot. Par ailleurs, ce tiroir permet avantageusement de pallier les contraintes de conception de l'organe de montage qui doit pouvoir réceptionner un composant provenant du chargeur tout en orientant convenablement ce composant afin que ledit composant puisse venir s'engager dans une zone d'engagement d'une pièce par un mouvement d'avance de la tête de robot dans le sens dudit second axe, ceci en conservant un minimum d'encombrement de la tête de robot.

Selon une réalisation de l'invention, l'organe de montage comprend un embout de montage qui comporte la zone de réception et qui est configuré pour prendre appui sur une zone d'engagement de la pièce, dans le sens d'un troisième axe parallèle au premier axe d'un composant extrait placé dans la zone de réception, durant la poussée dudit composant extrait engendrée par un mouvement d'avance de la tête de robot selon le second axe et permettant à la tête dudit composant extrait de pénétrer dans l'encoche de la zone d'engagement.

Selon une réalisation de la tête de robot objet de l'invention, l'organe de montage comprend un dispositif de compensation longitudinale configuré pour prendre appui sur une face supérieure d'une zone d'engagement d'une pièce et ajuster la position selon un troisième axe, de la tête d'un composant extrait placé dans la zone de réception par rapport à une encoche de ladite zone d'engagement, lors de l'engagement de la tête du composant extrait dans cette encoche, ledit troisième axe étant parallèle au premier axe du composant extrait placé dans la zone de réception. Cela garantit un positionnement de la tête du composant extrait au même niveau - à la même hauteur - que l'encoche de la zone d'engagement de la pièce, pour que la tête du composant extrait pénètre sans contrainte dans l'encoche, évitant ainsi un mauvais enclenchement ou une absence d'enclenchement du composant extrait sur la zone d'engagement de la pièce.

Selon une réalisation préférentielle, le dispositif de compensation longitudinale comprend un embout de montage comportant la zone de réception et une face inférieure configurée pour prendre appui sur une face supérieure d'une zone d'engagement d'une pièce lors de l'engagement de la tête du composant extrait dans l'encoche de la zone d'engagement de la pièce. L'appui de la face inférieure sur la face supérieure est réalisé dans le sens du troisième axe. Le dispositif de compensation longitudinale comprend une liaison glissière selon le troisième axe agencée entre l'embout de montage et une structure de la tête de robot. Le dispositif de compensation longitudinale comprend un premier système de suspension agencé entre l'embout et la structure et configuré pour travailler en compression lorsque la face inférieure de l'embout prend appui sur la face supérieure de la pièce.

Selon une réalisation de la tête de robot objet de l'invention, l'organe de montage comprend un dispositif de compensation latérale configuré pour ajuster la position selon un quatrième axe, de la tête du composant extrait placé dans la zone de réception par rapport à une encoche d'une zone d'engagement d'une pièce, durant l'engagement de la tête du composant extrait dans cette encoche, le quatrième axe étant perpendiculaire au premier axe du composant extrait placé dans la zone de réception et au second axe. Cela garantit un recentrage latéralement de la tête du composant extrait par rapport à l'encoche de la zone d'engagement de la pièce, pour que la tête du composant extrait pénètre sans contrainte dans l'encoche, évitant ainsi un mauvais enclenchement ou une absence d'enclenchement du composant extrait sur la zone d'engagement de la pièce.

Selon une réalisation préférentielle, le dispositif de compensation latérale comprend un embout de montage comportant la zone de réception, une liaison glissière selon le quatrième axe agencée entre l'embout de montage et une structure de la tête de robot, ains qu'un second système de suspension agencé entre l'embout de montage et la structure et configuré pour travailler en compression et en extension lorsque la tête du composant extrait commence à pénétrer dans l'encoche.

La présence du dispositif de compensation longitudinale et du dispositif de compensation latérale permet avantageusement de compenser les tolérances de conception de la pièce fonctionnelle qui peut présenter de légères déformations, les défauts de positionnement de la pièce fonctionnelle sur le système de posage la recevant et les déformations de la pièce fonctionnelle engendrées par son bridage sur le système de posage, de sorte à garantir un positionnement convenable du composant face à l'encoche de la zone d'engagement durant l'introduction de la tête du composant dans cette encoche.

Selon une première variante de l'organe de montage, celui-ci comprend un embout de montage qui comporte la zone de réception du composant extrait. La zone de réception est constituée d'un rail de réception de forme cintrée apte à recevoir la tête d'un composant extrait. Le rail de réception comprend une entrée par laquelle pénètre la tête du composant extrait alimenté par le tiroir et une sortie apte à correspondre avec une encoche d'une zone d'engagement d'une pièce, lors du montage du composant extrait dans cette encoche. L'embout de montage comprend un système de retenu du composant extrait au niveau de ladite sortie, afin d'éviter le dégagement involontaire du composant extrait hors de la zone de réception.

Selon cette première variante de l'organe de montage, celui-ci comprend un pousseur, ledit organe de montage étant configuré pour que l'embout de montage et le pousseur soient en mouvement relatif de sorte à pouvoir se rapprocher l'un de l'autre, le pousseur appuyant sur le composant extrait placé dans le rail de réception de sorte à l'extraire par la sortie dudit rail de réception, lors d'un rapprochement de l'embout de montage et du pousseur.

Selon une réalisation préférentielle, l'embout de montage est monté en liaison glissière sur une structure de la tête de robot selon un cinquième axe parallèle au second axe. En outre, l'embout de montage comprend un élément de butée apte à prendre appui sur une zone d'engagement d'une pièce lors d'un déplacement de la tête de robot selon le second axe, de sorte à translater selon le cinquième axe l'embout de montage en direction du pousseur. Par ailleurs, l'organe de montage comprend un système de rappel agencé entre l'embout de montage et la structure, le système de rappel étant configuré pour ramener l'embout de montage dans une position initiale lorsque la butée cesse entre l'embout de montage et la zone d'engagement de la pièce. De préférence, le système de rappel est configuré pour travailler en compression de sorte à ramener l'embout de montage dans sa position initiale lorsque la butée cesse entre l'embout de montage et la zone d'engagement de la pièce. Selon cette réalisation, la translation de l'embout de montage en direction du pousseur est engendrée par le déplacement complet de la tête de robot selon le second axe, la tête de robot étant manipulée par un robot sur lequel peut être agencée ladite tête de robot.

Selon cette réalisation préférentielle précitée de la première variante de l'organe de montage, le pousseur est monté en liaison glissière selon un sixième axe parallèle au cinquième axe. En outre, l'embout de montage est configuré pour venir en butée contre le pousseur au-delà d'un déplacement dudit embout selon le cinquième axe, lorsque l'élément de butée prend appui sur la zone d'engagement de la pièce, l'organe de montage comprenant un troisième système de suspension agencé entre le pousseur et la structure et configuré pour travailler en compression lors d'un déplacement du pousseur selon le sixième axe sous l'action de l'embout de montage ou d'une anomalie d'engagement du composant extrait dans une encoche d'une zone d'engagement d'une pièce. Cette mise en oeuvre permet avantageuse de détecter une anomalie de montage d'un composant sur une zone d'engagement d'une pièce, grâce à la montée en pression du troisième système de suspension provenant du fait que le pousseur pousse le composant qui ne parvient pas à s'engager convenablement dans l'encoche de la zone d'engagement en cas d'anomalie, ce qui fait reculer le pousseur tandis que la tête de robot continue à avancer. Cette montée en pression peut être mesurée par le robot équipé de ladite tête de robot, par exemple au moyen d'un capteur de mesure de pression qui remonte la donnée à une unité de commande, laquelle détecte une anomalie de montage au-delà d'un seuil de pression atteint. Cette mise en oeuvre permet aussi de réaliser un engagement d'un composant dans une encoche avec une précision de positionnement du composant dans l'encoche, en réglant la course de déplacement de l'embout de montage par rapport au pousseur, course au-delà de laquelle l'embout de montage vient en butée contre le pousseur et le déplace concomitamment en arrière, engendrant une montée en pression du troisième système de suspension, ce qui permet à l'unité de commande de déterminer le positionnement du composant dans l'encoche.

Selon cette première réalisation de l'organe de montage, le rail de stockage s'étend en hauteur et comprend une entrée en partie haute et une sortie en partie basse. En outre, le tiroir comprend un rail de transfert comprenant une entrée communiquant avec la sortie du rail de stockage et une sortie communiquant avec une entrée de la zone de réception sur l'embout de montage, le tiroir comprenant une platine juxtaposée au rail de transfert et un actionneur configuré pour déplacer en va-et-vient la platine, ladite platine étant configurée pour autoriser l'extraction d'un composant disposé en aval de la pluralité de composants, par la sortie du rail de stockage, le rail de transfert étant configuré pour acheminer le composant extrait jusque l'entrée de la zone de réception.

Selon une seconde variante de l'organe de montage, celui-ci comprend un embout de montage qui comporte un orifice constituant la zone de réception du composant extrait, l'orifice étant configuré pour recevoir par emboîtement le corps du composant extrait. De préférence, l'organe de montage comprend deux embouts de montage configurés pour fonctionner en alternance, ce qui permet d'augmenter la cadence de montage de composants. Bien évidemment, la variante avec un seul embout de montage reste envisageable, mais avec une cadence de montage moins élevée.

Selon cette seconde variante de l'organe de montage, le tiroir comprend une plaque munie d'une rainure en L présentant une entrée qui est apte à communiquer avec une sortie du rail de stockage pour engager un composant extrait sur la plaque et une sortie permettant de dégager le composant extrait de la plaque une fois le corps du composant extrait emboîté dans l'orifice de l'embout de montage. En outre, le tiroir comprend un actionneur configuré pour déplacer en va-et-vient la plaque afin de positionner l'entrée de la rainure en L face à la sortie du rail de stockage et de décaler le composant extrait placé dans la rainure en L en-dessous de l'orifice de l'embout de montage. Par ailleurs, l'organe de montage comprend un actionneur configuré pour descendre l'embout de montage lorsque le composant extrait placé dans la rainure en L est disposé sous l'orifice, de sorte à emboîter le corps du composant extrait dans l'orifice, ledit actionneur étant ensuite configuré pour descendre l'embout de montage sous la plaque une fois que ladite plaque est dégagée et que l'entrée de la rainure en L communique avec la sortie du rail de stockage.

En la présence de deux embouts de montage, selon cette seconde variante, la plaque comprend également deux rainures en L dont les entrées sont juxtaposées et les sorties sont disposées en opposition sur les côtés latéraux de ladite plaque, l'entrée d'une rainure en L communiquant avec la sortie du rail de stockage pendant que le composant extrait placé dans l'autre rainure en L est placé sous l'orifice de l'embout de montage qui lui est associé, l'actionneur du tiroir et les actionneurs des organes de montage étant configurés pour déplacer en alternance les rainures en L pour un chargement en alternance de composants sur les embouts de montage.

Selon une réalisation de la tête de robot objet de l'invention, le rail de stockage comprend une entrée et une sortie, le chargeur comprenant un organe presseur configuré pour pousser la pluralité de composants vers la sortie du rail de stockage. La présence de l'organe presseur garantit contre tout risque de blocage ou freinage des composants dans le rail de stockage durant leur descente par gravité dans ledit rail de stockage. Une variante sans cette organe presseur reste toutefois possible, le risque de blocage ou de freinage étant très faible durant la descente par gravité de la pluralité de composants.

Selon une réalisation de la tête de robot objet de l'invention, celle-ci comprend une caméra configurée pour contrôler le montage d'un composant extrait sur une zone d'engagement d'une pièce. Cela permettra de garantir la conformité du montage des composants sur les zones d'engagement d'une pièce. Cette caméra peut présenter aussi d'autres fonctions : avant montage des composants, la caméra peut permettre l'identification de la pièce fonctionnelle et le contrôle des positions des zones d'engagement sur la pièce fonctionnelle, notamment sur des longues pièces qui peuvent se déformer une fois placées et bridées sur le système de posage, les données recueillies par la caméra permettant de corriger la trajectoire du robot.

L'invention concerne également une installation de montage de composants de type agrafe sur une pièce. L'installation comprend un dispositif de distribution en composants qui comprend rail de stockage de composants configuré pour recevoir les têtes d'une pluralité de composants disposés l'un à la suite de l'autre. Un tel dispositif de distribution en composants pourra comporter les caractéristiques décrites dans la demande de brevet FR2933631A1. On pourrait aussi envisager de mettre en oeuvre les caractéristiques du dispositif de distribution décrit dans la demande de brevet FR2962721A1 ou dans la demande de brevet FR3042433A1, voire un dispositif de distribution du type bol vibrant. L'installation comprend également un robot qui comprend une tête de robot présentant les caractéristiques précitées objets de l'invention. Le robot est configuré pour venir positionner une entrée du rail de stockage du chargeur de composants en correspondance avec une sortie du rail de stockage du dispositif de distribution, le dispositif de distribution étant configuré pour permettre le transfert simultané de la pluralité de composants du rail de stockage dudit dispositif de distribution vers le rail de stockage du chargeur. Cela permet de réduire considérablement le temps de remplissage du chargeur sur la tête de robot.

Selon une réalisation préférentielle de l'installation, le rail de stockage du dispositif de distribution s'étend en hauteur et le rail de stockage du chargeur de la tête de robot s'étend en hauteur, le transfert simultané de la pluralité de composants se faisant par gravité. Des variantes avec d'autres agencements du rail de stockage du dispositif de distribution et du rail de stockage du chargeur restent envisageables dans le cadre de l'invention.

Selon une réalisation de l'installation, celle-ci pourra également comprendre des têtes de montage présentant les caractéristiques décrites dans la demande de brevet FR3094254A1.

### Brève description des figures

Les caractéristiques et avantages de l'invention apparaîtront à la lecture de la description suivante s'appuyant sur des figures, parmi lesquelles :
[Fig. 1] illustre une vue d'ensemble d'une tête de robot selon une première version de l'invention durant une opération de montage d'un composant de type agrafe dans une encoche d'une zone d'engagement d'une pièce ;
[Fig. 2] illustre une vue d'ensemble d'un composant de type agrafe, selon un mode de réalisation non limitatif ;
[Fig. 3] illustre une vue de dessus d'une encoche d'une zone d'engagement sur une pièce ;
[Fig. 4] illustre une vue d'ensemble de côté, d'une tête de robot selon une première version de l'invention, ladite figure 4 montrant un embout de montage et un pousseur dans une position initiale, l'embout de montage étant en appui sur une zone d'engagement d'une pièce ;
[Fig. 5] illustre une vue partielle de côté de la tête de robot de la figure 4, l'embout de montage ayant reculé par rapport au pousseur qui s'apprête à pousser un composant extrait pour le sortir de l'embout de montage et l'introduire dans une encoche de la zone d'engagement de la pièce ;
[Fig. 6] illustre une vue partielle de côté de la tête de robot des figures 4 et 5, l'embout de montage ayant continué à reculer par rapport au pousseur qui pousse le composant extrait dans l'encoche de la zone d'engagement de la pièce ;
[Fig. 7] illustre une vue partielle de côté de la tête de robot des figures 4 à 6, l'embout de montage ayant continué à reculer par rapport au pousseur et étant en butée sur celui-ci, le composant extrait dans l'encoche de la zone d'engagement de la pièce ayant atteint sa position de montage sur la pièce et le pousseur reculant avec l'embout de montage sur la structure de la tête de robot ;
[Fig. 8] illustre une vue d'ensemble de la tête de robot des figures 4 à 7 selon un autre angle de vue mettant en évidence la présence d'un dispositif de compensation longitudinale et un dispositif de compensation latérale ;
[Fig. 9] illustre une autre vue partielle de la tête de robot selon la première version, celle-ci montrant d'autres caractéristiques techniques d'un chargeur et de l'embout de montage sur ladite tête de robot ;
[Fig. 10] illustre une autre vue partielle de la tête de robot selon la première version, celle-ci montrant un rail de transfert sur le tiroir du chargeur ;
[Fig. 11] illustre la tête de robot selon la première version en position de chargement de composants, un rail de stockage du chargeur étant contigüe à un rail de stockage d'un dispositif de distribution de composants ;
[Fig.12] illustre partiellement une tête de robot selon une seconde version de l'invention, en opération de montage d'un composant sur une zone d'engagement d'une pièce ;
[Fig. 13] illustre une autre vue partielle de la tête de robot selon la seconde version, mettant en avant la conception du tiroir du chargeur et de l'organe de montage sur ladite tête de robot ;
[Fig. 14] illustre une autre vue partielle de la tête de robot selon la seconde version, mettant en avant la conception du tiroir du chargeur et de l'organe de montage sur ladite tête de robot ;
[Fig. 15] illustre une autre vue partielle de la tête de robot selon la seconde version, mettant en avant la conception du tiroir du chargeur sur ladite tête de robot ;
[Fig. 16] illustre une variante de pièce sous la forme d'une installation qui permet un montage de composants sur une pièce fonctionnelle en deux temps, en ce sens que les composants sont d'abord montés sur des zones d'engagement de têtes de montage de l'installation au moyen de la tête de robot.

### Description détaillée

Dans la suite de la description, les mêmes références sont utilisées pour désigner les mêmes caractéristiques selon les deux versions de la tête de robot 1, sans indication contraire dans le texte.

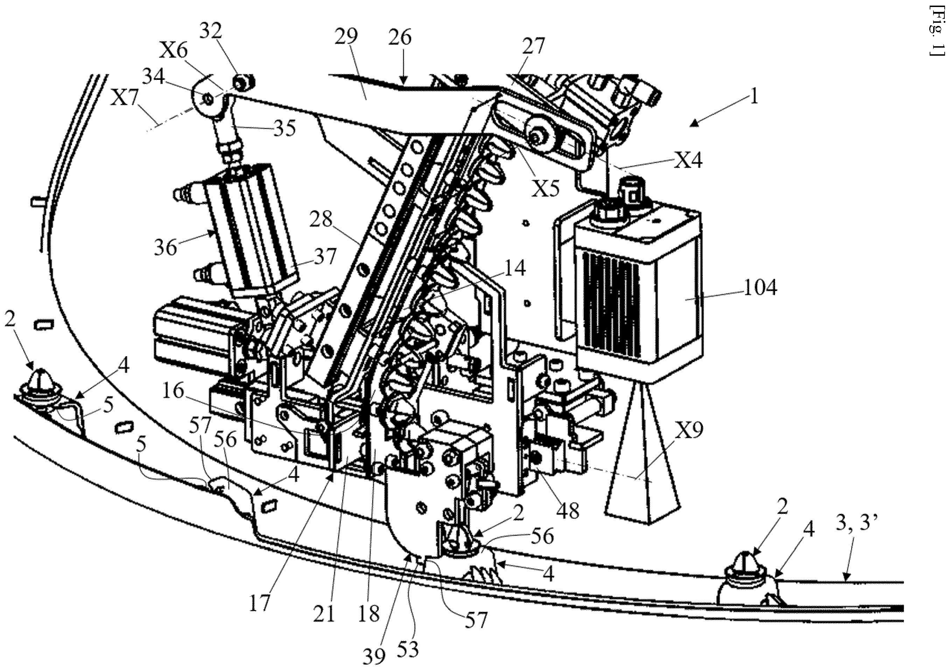

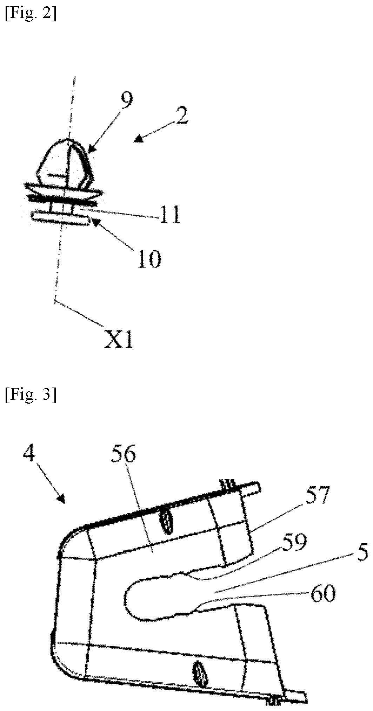

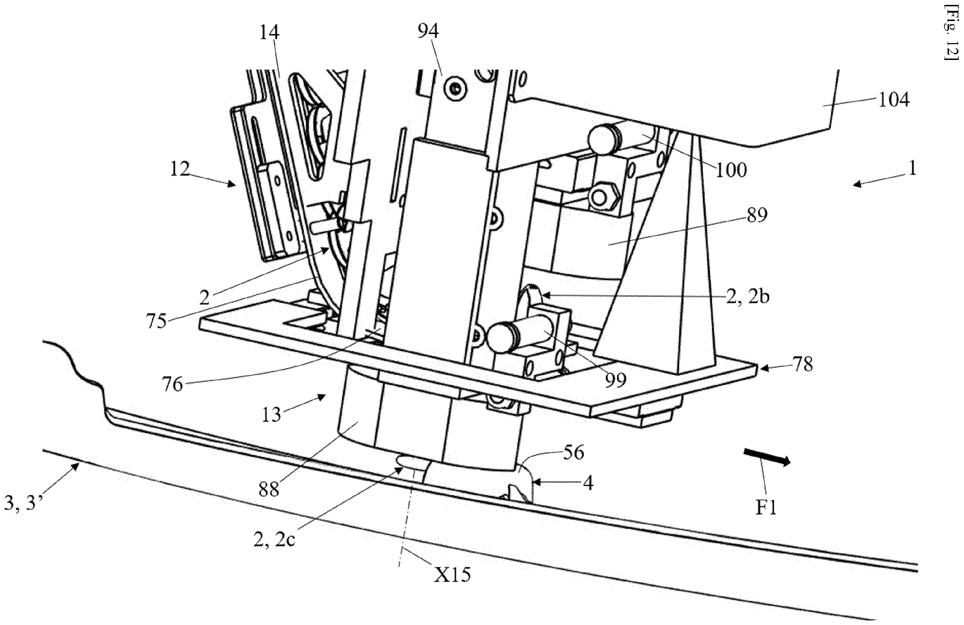

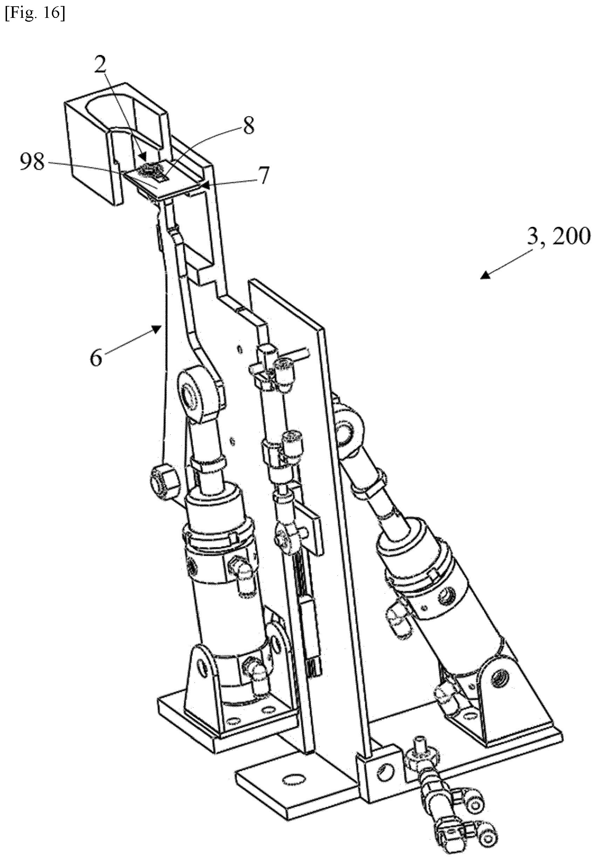

La tête de robot 1 est conçue pour le montage de composants 2 sur une pièce 3. Sur les figures 1 et 12, la pièce 3 illustrée est une pièce fonctionnelle 3' qui présente des zones d'engagement 4, chaque zone d'engagement 4 étant munie d'une encoche 5. Une telle zone d'engagement 4 est également appelée un porte-agrafe. On entend par pièce fonctionnelle 3' une pièce qui présente une fonction technique et/ou esthétique, par exemple une pièce d'habillage d'un véhicule automobile, la pièce fonctionnelle 3' étant destinée à être fixée au moyen de composants 2 sur un support (non illustré), par exemple un châssis, une structure d'habitacle ou une structure d'une porte d'un véhicule. La pièce 3 peut être aussi une installation 200 de montage de composants 2 qui présente des têtes de montage 6, chaque tête de montage 6 comprenant une zone d'engagement 7 munie d'une encoche 8, telle que l'illustre la figure 16. Une telle installation 200 est décrite en détail dans la demande de brevet FR3094254A1 et permet le montage de composants 2 sur une pièce fonctionnelle 3' au moyen desdites têtes de montage 6. Tel que l'illustre la figure 2, le composants 2 est du type agrafe, celui-ci s'entendant longitudinalement selon un axe X1 et comprenant un corps 9 et une tête 10, la tête 10 comprenant une gorge 11 qui vient s'engager dans l'encoche 5 ou 8 de la zone d'engagement 4 ou 7.

La suite de la description décrit le montage d'un composant 2 sur une zone d'engagement 4 d'une pièce fonctionnelle 3', mais cette description vaut également pour le montage d'un composant 2 sur une zone d'engagement 7 d'une tête de montage 6 d'une installation 200.

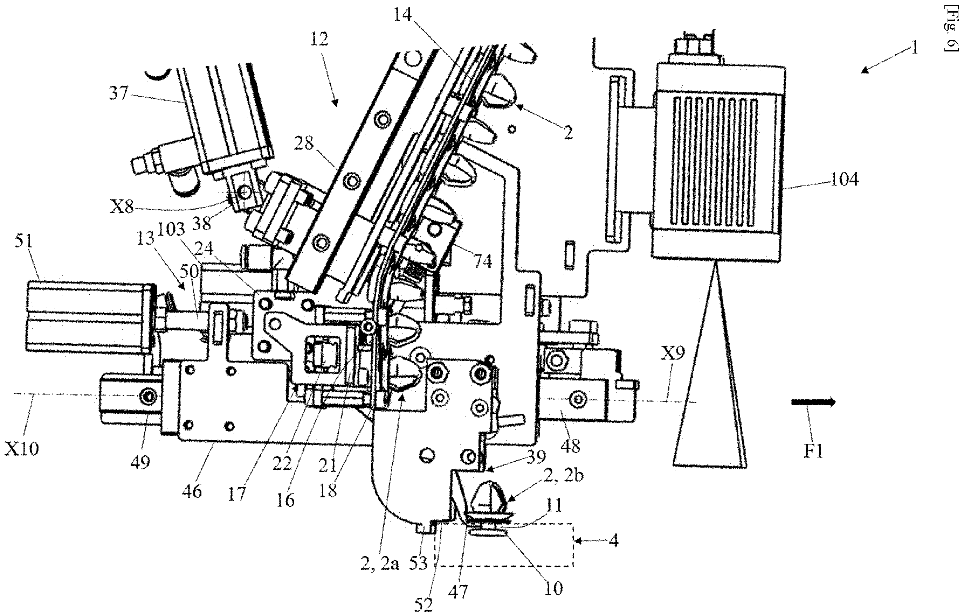

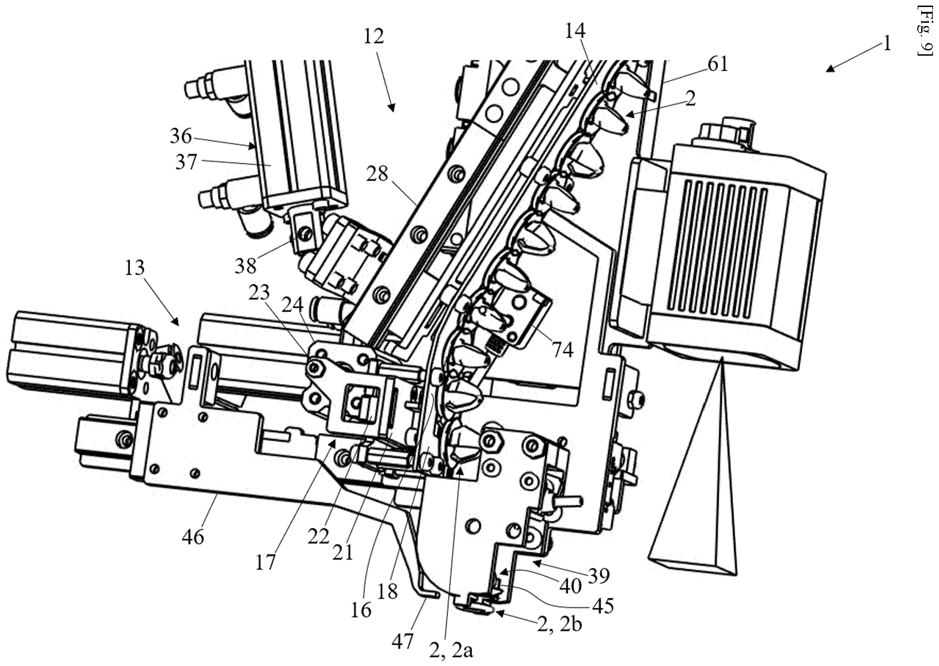

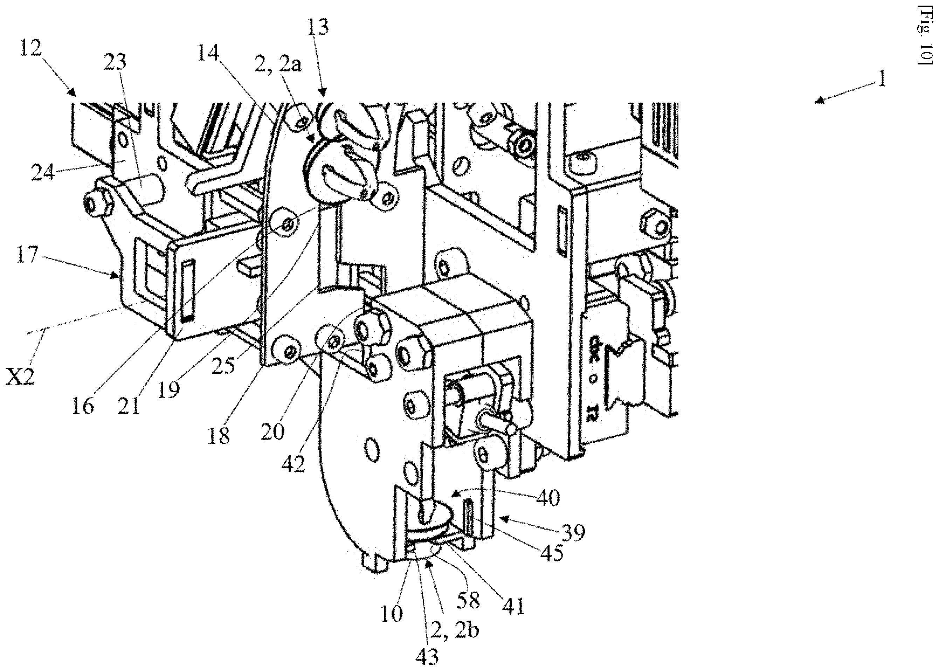

Sur les figures 1 et 4 à 11 est illustrée une première version de la tête de robot 1. La tête de robot 1 comprend un chargeur 12 et un organe de montage 13. Le chargeur 12 comprend un rail de stockage 14 qui s'étend longitudinalement en hauteur et présente une entrée 15 en partie haute et une sortie 16 en partie basse, le rail de stockage 14 recevant les têtes 10 d'une pluralité de composants 2 disposés l'un à la suite de l'autre. De préférence, le rail de stockage 14 permet la réception de cinq à vingt composants 2, préférentiellement de dix à vingt composants 2, afin de limiter les temps de chargement en composants 2 du chargeur 12 tout en ayant une capacité de composants suffisante pour assurer la mise en place de composants 2 sur toutes les zones d'engagement 4 présentes sur la pièce 3.

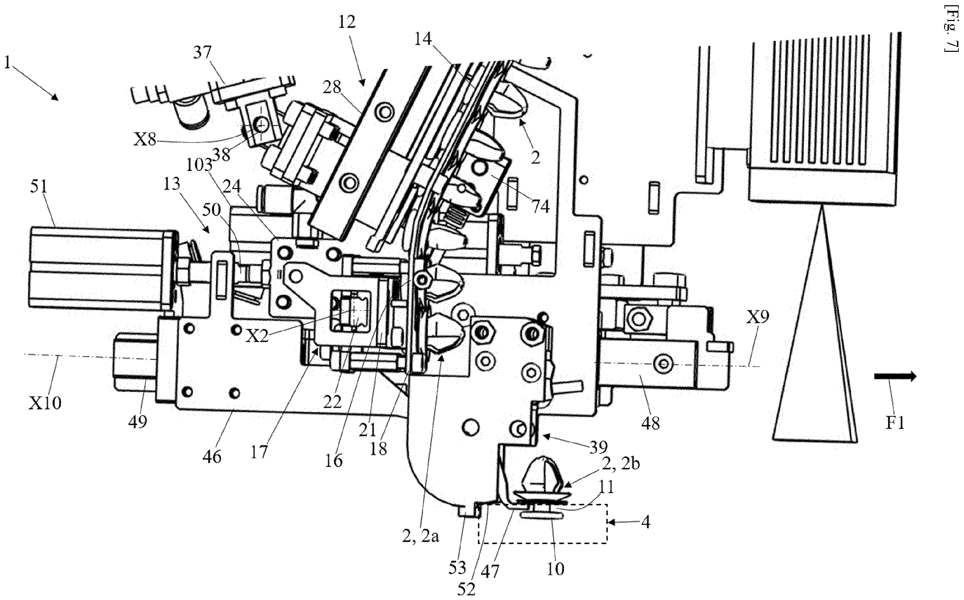

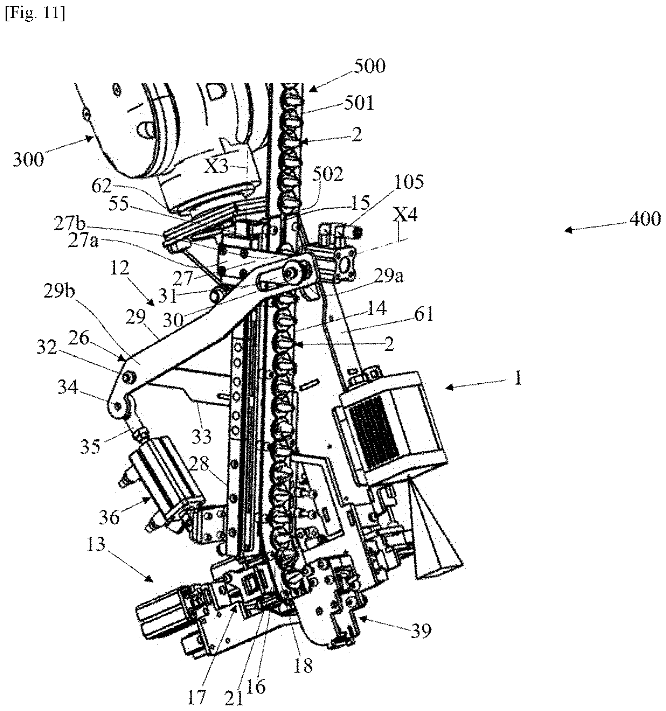

En regard des figures 1 et 4 à 11, le chargeur 12 comprend un tiroir 17 qui comprend un rail de transfert 18 qui est disposé dans la continuité du rail de stockage 14 en partie inférieure de celui-ci, le rail de stockage 14 et le rail de transfert 18 étant de préférence réalisés en une seule pièce. Le rail de transfert 18 comprend une entrée 19 qui communique avec la sortie 16 du rail de stockage 14. Le rail de transfert 18 comprend également une sortie 20. Le tiroir 17 comprend une platine 21 qui est montée en liaison glissière 22 selon un axe transversal X2 illustré figures 7 et 11. Cette platine 21 est assujettie à un piston 23 d'un vérin 24, de préférence un vérin pneumatique, ce qui permet de déplacer le tiroir 17 en va-et-vient le long de l'axe X2. Lorsque le piston 23 est en position rentrée, la platine 21 retient un composant 2a disposé en aval du rail de stockage 14 au niveau de sa sortie 16. Lorsque le piston 23 est en position sortie, la platine 21 laisse pénétrer le composant 2a dans l'entrée 19 du rail de transfert 18 qui présente une rainure 25 en forme de chicane, ledit composant 2a descendant par gravité tout en étant poussé par la platine 21 une fois que le piston 23 revient en position rentrée, permettant au composant 2a de sortir du rail de transfert 18 par sa sortie 20.

En regard des figures 1 et 4 à 11, le chargeur 12 comprend un organe presseur 26 qui pousse le composant 2b disposé en amont dans le rail de stockage 14 pour contraindre la pluralité de composants 2 à se diriger vers la sortie 16 dudit rail de stockage 14. Cet organe presseur 26 permet de garantir contre tout risque de blocage de la pluralité de composants 2 dans le rail de stockage 14. La probabilité d'un blocage de la pluralité de composants 2 dans le rail de stockage 14 est cependant très faible, voire nulle, au vu des tests menés par la demanderesse, la descente de la pluralité de composants 2 se faisant naturellement par gravité sans blocage du fait que le rail de stockage s'entend en hauteur dans une position plus ou moins verticale ou légèrement inclinée par rapport à la verticale et que les composants 2 l'un à la suite de l'autre dans le rail de stockage 14 ne s'enchevêtrent pas ; une version sans cet organe presseur 26 pourrait donc être envisagée. L'organe presseur 26 comprend un bras 27 qui supporte un vérin 105 dont le piston (non illustré) vient au contact du composant 2d disposé en amont de la pluralité de composants 2 dans le rail de stockage 14. Ce bras 27 a une première extrémité 27a qui est montée en liaison glissière 55 par rapport à une structure 28 de la tête de robot 1, dans le sens de la longueur selon un axe X3 qui s'étend parallèlement au rail de stockage 14. La seconde extrémité 27b du bras 27 est montée en liaison glissière selon un axe X4 par rapport à une bielle 29, d'une part, et en liaison pivot selon un axe X5 par rapport à ladite bielle 29, d'autre part. Pour cela, la seconde extrémité 27b du bras est montée en liaison 30 dans un trou oblong 31 agencé dans une première portion d'extrémité 29a de la bielle 29. La seconde portion d'extrémité 29b de la bielle 29 est montée en liaison pivot 32 d'axe X6 par rapport à une patte de support 33 assujettie à la structure 28, l'extrémité 29c de cette seconde portion d'extrémité 29b étant montée en liaison pivot 34 d'axe X7 par rapport à un piston 35 d'un vérin 36, de préférence pneumatique, le corps 37 du vérin 36 étant lui-même monté en liaison pivot 38 d'axe X8 vis-à-vis de la structure 28.

En regard des figures 1 et 4 à 11, l'organe de montage 13 comprend un embout de montage 39 qui comporte une zone de réception 40 du composant 2b qui est extrait du rail de stockage 14 grâce au tiroir 17, comme expliqué précédemment. Cette zone de réception 40 est mise en oeuvre sur l'embout de montage 39 au moyen d'un rail de réception 41 présentant une forme cintrée de sorte qu'une entrée 42 du rail de réception 41 communique avec la sortie 20 du rail de transfert 18 et qu'une sortie 43 du rail de réception 41 permettent d'extraire le composant 2b de l'embout de montage 39 au moment de son engagement dans une encoche 5 d'une zone d'engagement 4. L'embout de montage 39 comprend des butées latérales 44, 45 qui permettent de retenir le composant 2b dans la zone de réception 40 afin d'éviter son extraction inopinément.

En regard des figures 1 et 4 à 11, l'organe de montage 13 comprend un pousseur 46 qui comprend un doigt 47 configuré pour venir se loger dans la gorge 11 sur la tête 10 du composant 2b placé dans la zone de réception 40. Le pousseur 46 est constitué d'une platine dont l'épaisseur permet son passage au travers d'une rainure cintrée 58 du rail de réception 41, permettant ainsi au doigt 47 de pousser le composant 2b logé dans la rainure cintrée 58 pour l'extraire de l'embout de montage 39. L'embout de montage 39 est monté en liaison glissière 48 sur la structure 28 de la tête de robot 1, selon un axe X9. Le pousseur 46 est également monté en liaison glissière 49 sur la structure 28, selon un axe X10 parallèle à l'axe X9. Le pousseur 46 est assujetti à l'extrémité d'un piston 50 d'un vérin 51, de préférence pneumatique, monté sur la structure 28. L'embout de montage 39 comprend une face inférieure 52 qui comporte deux éléments protubérants 53, 54 formant une butée.

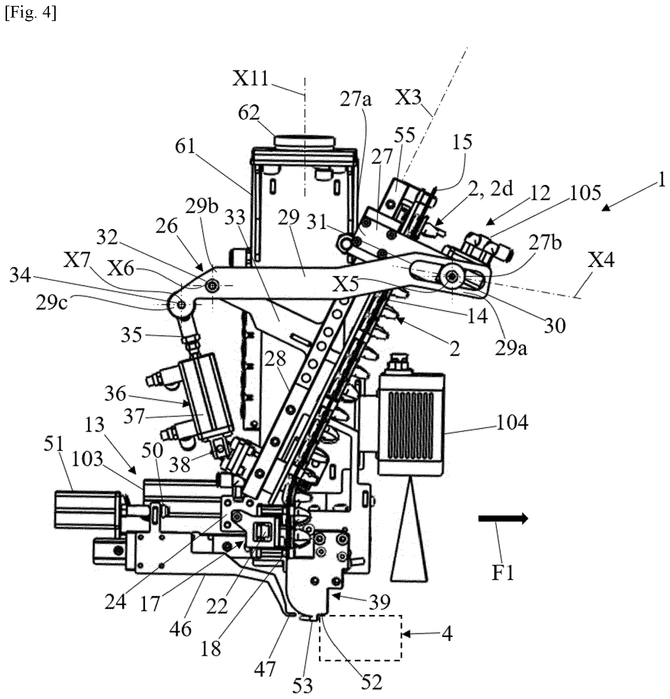

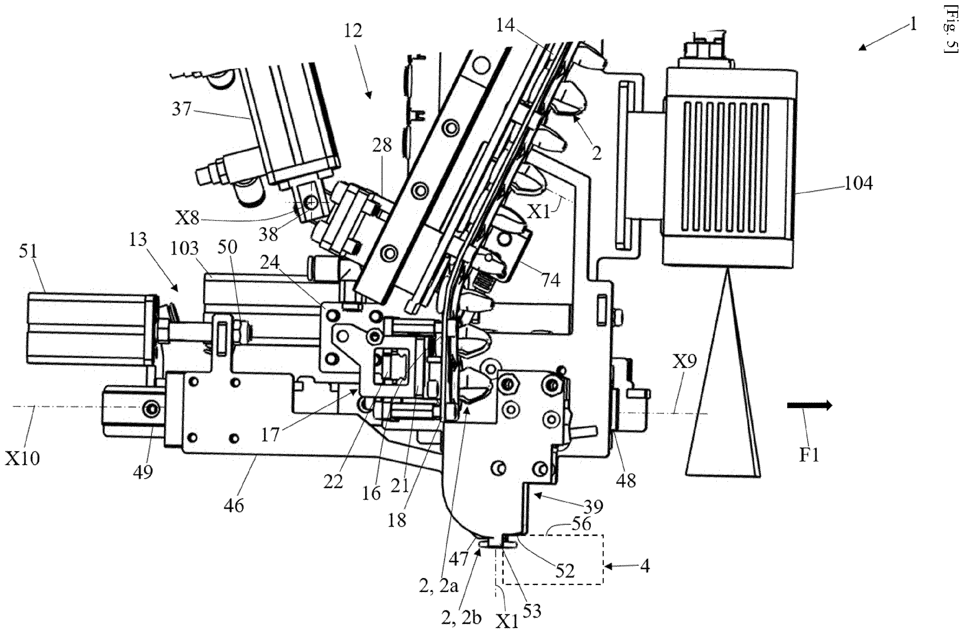

La tête de robot 1 est montée sur un robot 300 qui la manipule pour venir engager les composants 2 sur les zones d'engagement 4 de la pièce fonctionnelle 3'. Durant cette manipulation, la face inférieure 52 de l'embout de montage 39 est amenée en appui sur une face supérieure 56 de la zone d'engagement 4, le robot 300 avançant la tête de robot 1 dans le sens de la flèche F1 schématisée sur les figures 4 à 7, permettant aux éléments protubérants 53, 54 de buter contre un bord 57 de la face supérieure 56, sur lequel débouche l'encoche 5 de la zone d'engagement 4. Cette mise en butée permet de déplacer l'embout de montage 39 en arrière selon l'axe X9, dans le sens opposé à la flèche F1, vis-à-vis de la structure 28, ce qui approche l'embout de montage 39 du pousseur 46 jusqu'à ce que le doigt 47 du pousseur 46 pénètre dans la gorge 11 du composant 2b placé dans la zone de réception 40, comme l'illustrent les figures 4 et 5, ce qui permet ensuite au doigt 47 d'extraire le composant 2b de la sortie 43 du rail de réception 41 pour venir l'engager dans l'encoche 5, la force exercée par le doigt 47 sur le composant 2b étant supérieure à celle exercée par les butées latérales 44, 45.

En cas d'un mauvais positionnement du composant 2b vis-à-vis de l'encoche 5, engendrant un blocage dudit composant 2b, le déplacement de la tête de robot 1 selon la flèche F1 contraint le pousseur 46 à se déplacer en arrière selon l'axe X10, concomitamment au déplacement de l'embout de montage 39 selon l'axe X9, ce qui comprime le vérin 51 dont le piston 50 est assujetti au pousseur 46. La compression du vérin 51 associée à la position de la tête de robot 1 permet au robot 300 de détecter une anomalie de montage du composant 2b sur la zone d'engagement 4 de la pièce fonctionnelle 3'.

Au contraire, lorsque le composant 2b est convenablement positionné vis-à-vis de l'encoche 5, le déplacement de la tête de robot 1 dans le sens de la flèche F1 permet de déplacer en arrière l'embout de montage 39 dans le sens opposé à la flèche F1, tandis que le pousseur 46 se déplace avec la structure 28 de la tête de robot 1 dans le sens de la flèche F1 et pousse le composant 2b qui pénètre dans l'encoche 5, étant donné que la force exercée par le vérin 51 sur le pousseur 46 est supérieure à la force de pénétration du composant 2b dans l'encoche 5. La tête de robot 1 continue donc à se déplacer dans le sens de la flèche F1 jusqu'à ce que l'embout de montage 39 - qui se déplace selon l'axe X9 dans le sens opposé à la flèche F1 - vienne en butée contre l'extrémité du piston 50 assujettie au pousseur 46, ce qui ensuite engendre le déplacement concomitant du pousseur 46 selon l'axe X10 et de l'embout de montage 39 selon l'axe X9, dans le sens opposé à la flèche F1, le vérin 51 étant ainsi comprimé et le composant 2b cessant de s'enfoncer dans l'encoche 5, comme l'illustrent les figures 5 à 7. La compression du vérin 51 permet au robot 300 de détecter que le composant 2b est engagé dans l'encoche 5. Cette conception permet de définir une course de l'embout de montage 39 au-delà de laquelle le pousseur 46 cesse d'enfoncer le composant 2b dans l'encoche 5, ce qui permet d'engager avec une grande précision un composant 2b dans une encoche 5. Cela permet notamment de positionner précisément un composant 2 au niveau de crans 59, 60 dans une encoche 5 de la zone d'engagement 4, illustrés en figure 3, ces crans 59, 60 garantissant un maintien ferme du composant 2 durant l'agrafage ultérieur de la pièce fonctionnelle 3' sur un support (non illustré) et durant l'usage. Pour mesurer plus précisément encore la position d'engagement d'un composant 2b dans l'encoche 5 d'une zone d'engagement 4, il serait également possible de prévoir une règle magnétique (non illustrée) sur le vérin 51 qui permettrait de détecter très précisément le recul du piston 50 dudit vérin 51. Une version basique de la tête de robot 1 pourrait être envisagée avec un pousseur 46 fixe sur la structure 28 et sans le vérin 51, sans tous les avantages procurer par la version décrite ci-avant.

La tête de montage 1 pourrait aussi comprend un capteur (non illustré) qui détecte le départ en arrière de l'embout de montage 39 qui se déplace selon l'axe X9 dans le sens opposé à la flèche F1, le robot 300 étant programmé pour calculer la course d'avancer de la tête de montage 1 selon le sens de la flèche F1 et déterminer précisément la position d'engagement du composant extrait 2b dans l'encoche 5 de la zone d'engagement 4. Cela permet notamment d'engager des composants 2 dans des zones d'engagement 4 sur la pièce fonctionnelle 3' pour lesquelles les positions des crans 59, 60 varient d'une zone d'engagement 4 à l'autre.

Une fois le composant 2b monté sur la zone d'engagement 4 de la pièce fonctionnelle 3', le robot 300 peut dégager la tête de robot 1 de la zone d'engagement 4, le vérin 51 travaillant en compression permettant alors de ramener le pousseur en position initiale et, de la même manière, un autre vérin 103 monté entre la structure 28 et l'embout de montage 39 et travaillant en compression permet aussi de ramener l'embout de montage 39 dans sa position initiale.

En regard des figures 1 et 4 à 11, la tête de robot 1 comprend une colonne principale 61 qui s'entend longitudinalement selon un axe X11 et comporte en partie supérieure une pièce de raccord 62 pour le montage de la tête de robot 1 sur le robot 300. La colonne principale 61 porte la structure 28 qui reçoit le chargeur 12 et l'organe de montage 13. Un dispositif de compensation longitudinale 63 est agencé entre la colonne principale 61 et la structure 28. Ce dispositif de compensation longitudinale 63 est configuré pour ajuster la position selon l'axe X11, de l'embout de montage 39 lorsque sa face inférieure 52 prend appui sur la face supérieure 56 de la zone d'engagement 4 de la pièce fonctionnelle 3', ce qui par conséquent permet d'ajuster la position de la tête 10 du composant 2b placé dans la zone de réception 40 par rapport à l'encoche 5 de la zone d'engagement 4, l'axe X1 du composant 2b placé dans la zone de réception 40 étant parallèle à l'axe X11 de la colonne principale 61. Le dispositif de compensation longitudinale 63 comprend un vérin 64, de préférence pneumatique, monté en compression qui s'étend selon un axe X12 parallèle à l'axe X11 et qui comprend un piston 65 dirigé vers le bas. Une pièce de support 66 est montée en liaison glissière sur la colonne principale 61 selon un axe X13 parallèle à l'axe X11 et elle est assujettie au piston 65. La pièce de support 66 reçoit la structure 28 sur laquelle est montée l'embout de montage 39. Le vérin 64 monté en compression joue le rôle d'un amortisseur qui tend à repousser vers le bas la pièce de support 66, selon l'axe X13. La pièce de support 66 comprend une patte 67 qui est logée dans une encoche 68 agencée sur une pièce 69 assujettie à la colonne principale 61, la patte 67 venant en butée sur un bord inférieur 70 de l'encoche pour limiter le déplacement vers le bas de la pièce de support 66 et définir une position initiale de l'embout de montage 39, avant que sa face inférieure 52 ne vienne en appui sur la face supérieure 56 de la zone d'engagement 4 de la pièce fonctionnelle 3'. Le robot 300 est réglé pour que la tête de robot 1 descende suffisamment pour que la face inférieure 52 de l'embout de montage 39 vienne convenablement appuyer sur la face supérieure 56 de la zone d'engagement 4, afin que le vérin 64 se comprime légèrement, ce qui garantit ainsi un ajustement systématique de la position de la tête 10 du composant 2b par rapport à l'encoche 5 de la zone d'engagement 4. Le vérin 64 pourrait être remplacé par un autre organe de rappel, par exemple un ressort monté en compression.

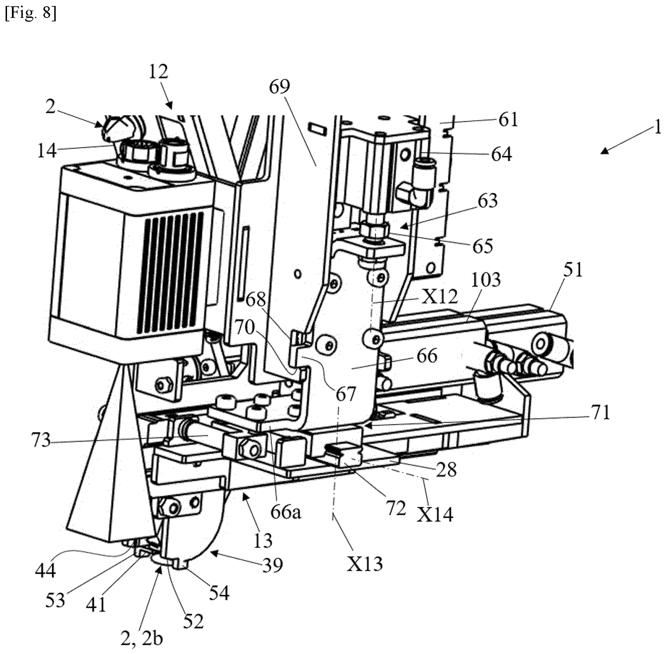

En regard de la figure 8, notamment, la pièce de support 66 comprend une partie en équerre 66a, un dispositif de compensation latérale 71 étant agencé entre cette partie en équerre 66a et la structure 28 sur laquelle est monté l'embout de montage 39. Pour cela, la structure 28 est montée en liaison glissière 72 selon un axe X14 sur la partie en équerre 66a. L'axe X14 est perpendiculaire à l'axe X13 du vérin 64 et aussi à l'axe X9 de la liaison glissière 48 entre l'embout de montage 39 et la structure 28. Ce dispositif de compensation latérale 71 permet d'ajuster la position selon l'axe X14 de l'embout de montage 39 pour que la tête 10 du composant 2b placé dans la zone de réception 40 puisse se centrer convenablement vis-à-vis de l'encoche 5 de la zone d'engagement 4 durant l'engagement de la tête 10 du composant 2 dans cette encoche 5. Le dispositif de compensation latérale 71 comprend également un organe de suspension 73 agencé entre la structure 28 et la partie en équerre 66a, ledit organe de suspension 73 étant configuré pour travailler en compression et en extension pour bien recentrer l'embout de montage 39 vis à vis de l'encoche 5 lorsque la tête 10 du composant 2b commence à pénétrer dans l'encoche 5. Cet organe de suspension 73 peut être constitué d'un ou plusieurs ressorts de rappel, voire d'une lame de rappel flexible, ayant une position d'équilibre.

Des variantes de réalisation du dispositif de compensation longitudinale 63 et du dispositif de compensation latérale 71 pourraient être envisagées pour cette première version de la tête de robot 1, notamment en mettant en oeuvre lesdits dispositifs de compensation longitudinale 63 et latérale 71 directement entre la structure 28 et l'embout de montage 39.

La figure 11 illustre partiellement une installation 400 de montage de composant 2 sur une pièce 3 qui comprend le robot 300 sur lequel est montée la tête de robot 1 selon cette première version décrite précédemment. L'installation 400 comprend également un dispositif de distribution 500 de composants 2 qui comprend de préférence des caractéristiques similaires à celles du dispositif de distribution décrit dans la demande de brevet FR2962721A1 ou dans la demande de brevet FR3042433A1, le dispositif de distribution 500 comprenant un rail de stockage 501 permettant de stocker provisoirement une pluralité de composants 2 l'un à la suite de l'autre, le rail de stockage 501 comprenant une sortie 502 par laquelle est extrait la pluralité de composants 2. Un organe de retenu, non illustré sur la figure 11, par exemple un doigt commandé par un actionneur de type vérin, est agencé au niveau de cette sortie 502 et permet de retenir provisoirement les composants 2 dans ledit rail de stockage 501. Le robot 300 est configuré pour amener la tête de montage 1 jusqu'au dispositif de distribution 500, lorsque le rail de stockage 14 du chargeur 12 est vide, voire presque vide. Pour cela, la tête de montage 1 comprend un capteur 74 qui détecte la présence ou non de composants 2 dans le rail de stockage 14 du chargeur 12. Le robot 300 positionne alors le rail de stockage 14 du chargeur verticalement sous le rail de stockage 501 du dispositif de distribution 500 de manière à faire correspondre l'entrée 15 du rail de stockage 14 avec la sortie 502 du rail de stockage 501, puis l'organe de retenu (non illustré) sur le dispositif de distribution 500 est activé pour autoriser la descente par gravité de la pluralité de composants 2 qui est ainsi transférée instantanément du rail de stockage 501 vers le rail de stockage 14.

L'utilisation des vérins 51, 103 sur l'organe de montage 13 et du vérin 24 sur le chargeur 12, de type pneumatique bidirectionnel, présente pour avantage de pouvoir purger le rail de stockage 14 du chargeur, la purge des composants 2 en trop dans le rail de stockage , la purge des composants 2 en trop dans le rail de stockage 14 pouvant être réalisée dans un bac de récupération avant de venir remplir à nouveau le chargeur 12 alimenté par le dispositif de distribution 500, de la manière décrite ci-avant.

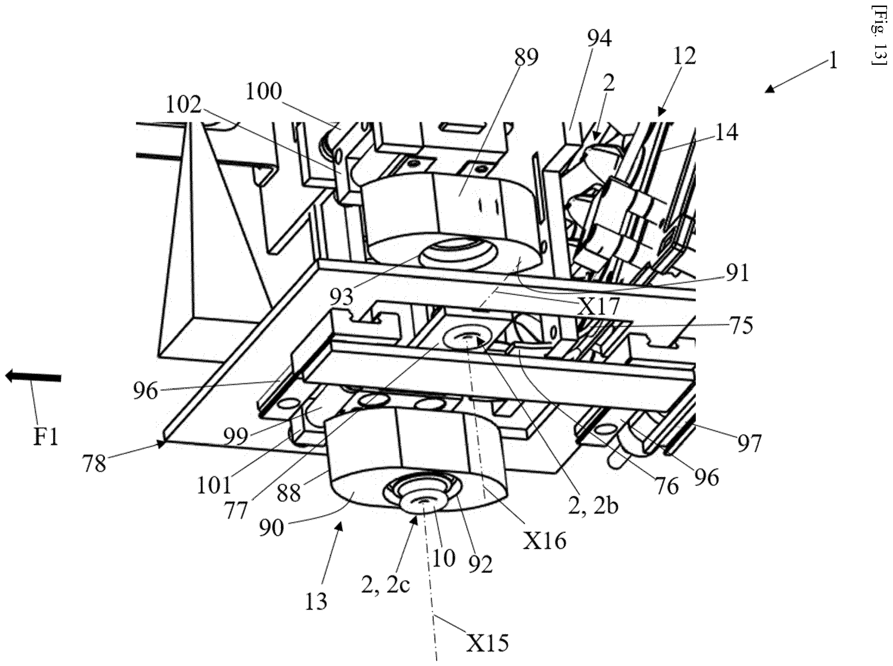

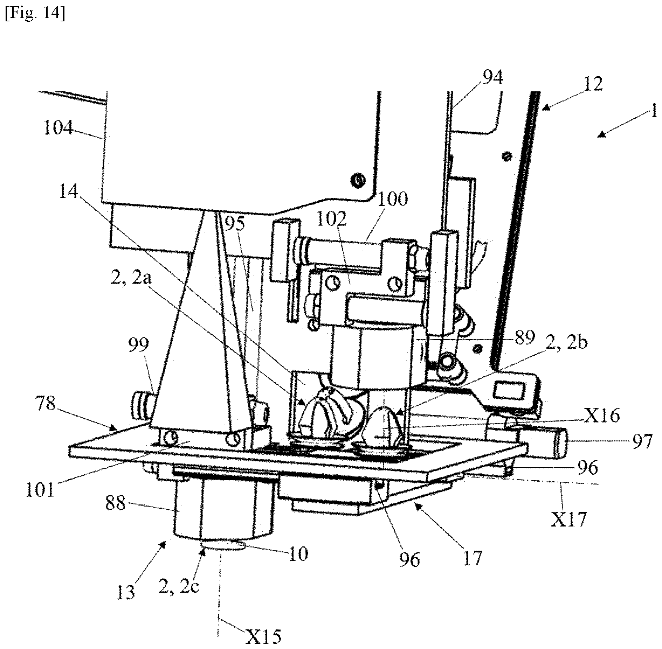

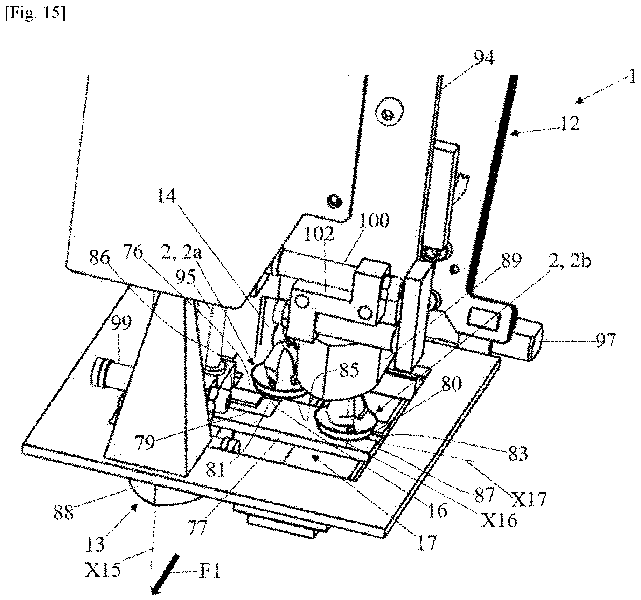

Les figures 12 à 15 illustrent une seconde version de la tête de robot 1 pour laquelle le rail de stockage 14 du chargeur 12 comprend une partie d'extrémité inférieure 75 qui est incurvée de sorte que son extrémité 76, comprenant la sortie 16, soit dans le plan d'une plaque 77 d'un tiroir 78. La plaque 77 comprend deux rainures 79, 80 en L qui comprennent chacune une entrée 81 (une seule visible sur la figure 15) et une sortie 83 (une seule visible sur la figure 15), les deux entrées 81étant disposées l'une à côté de l'autre sur un bord 85 de la plaque 77, ce bord 85 étant juxtaposé à la sortie 16 du rail de stockage 14. Les deux sorties 83, 84 sont quant à elles disposées en opposition respectivement sur les bords latéraux 86, 87 de la plaque 77.

En regard des figures 12 à 15, l'organe de montage 13 comprend deux embouts de montage 88, 89 qui comprennent chacun une face inférieure 90, 91. Les faces inférieures 90, 91 comprennent chacune un orifice 92, 93 dont la forme et les dimensions sont adaptées au corps 9 du composant 2, afin de permettre un emboîtement du corps 9 d'un composant 2 dans l'embout de montage 88, 89, par introduction dans cet orifice 92, 93. Les embouts de montage 88, 89 sont montés en translation selon deux axes X15, X16 qui s'étendent dans le sens de la longueur de la tête de robot 1, parallèlement à l'axe X1 du composant 2b placé sur la plaque 77 du tiroir 78, c'est-à-dire perpendiculairement au plan de ladite plaque 77. Les translations des embouts de montage 88, 89 peuvent être réalisées par tout moyen de translation approprié. Sur les figures 12 à 15, deux vérins (non illustrés en détail) sont montés sur la structure 94 de la tête de robot 1, les pistons 94 (seul un piston est visible, sur la figure 15) de ces deux vérins étant respectivement assujettis aux deux embouts de montage 88, 89. Les vérins sont de préférence pneumatiques.

En regard des figures 12 à 15, la plaque 77 du tiroir 78 est montée en liaison glissière 96 selon un axe X17 qui est transversal par rapport au mouvement d'avance de la tête de robot 1 défini par la flèche F1, lors de l'engagement d'un composant 2 dans une encoche 5 d'une zone d'engagement 4. La plaque 77 est activée par un actionneur, de préférence un vérin 97 pneumatique qui permet de décaler latéralement la plaque 77 d'un premier côté illustré en figure 15, selon lequel l'entrée 81 du premier rail 79 est disposée face à la sortie 16 du rail de stockage 14, pour permettre au composant 2a disposé en aval du rail de stockage 14, au niveau de la sortie 16, de pénétrer dans le rail 79 et de venir se positionner dans la partie en équerre 79a dudit rail 79, tandis que le composant 2b placé dans la partie en équerre 80a du second rail 80 est positionné sous l'orifice 93 du second embout de montage 89. Lorsque la plaque 77 est décalée sur ce premier côté, le premier embout de montage 88, dont l'orifice réceptionne un précédent composant 2c extrait, peut descendre selon l'axe X15 en sorte de venir placer le composant 2c sous le tiroir 78, position selon laquelle le composant 2c peut être engagé dans une encoche 5 d'une zone d'engagement 4, une fois la face inférieure 90 du premier embout de montage 88 en appui contre une face supérieure 56 d'une zone d'engagement 4, la tête de robot 1 étant ensuit avancée selon la flèche F1. Concomitamment, le second embout de montage 89 est descendu jusqu' à ce que son orifice 93 vient s'engager sur le corps 9 du composant 2b extrait et placé dans la partie en équerre 80a du second rail 80. Lorsque le composant 2c est engagé sur la zone d'engagement 4 de la pièce fonctionnelle 3', le piston 95 du vérin assujetti au premier embout de montage 88 peut remonter jusque dans sa position initiale, au-dessus de la plaque 77. La plaque 77 peut être ensuite décalée sur le second côté tandis que le second embout de montage 89 demeure en position engagée sur le composant 2b, permettant audit composant 2b de sortir du second rail par sa sortie 84 en demeurant emboîté sur l'embout de montage 89, lequel peut ensuite descendre sous la plaque 77, comme précédemment pour le premier embout de montage 88, pour un engagement du composant 2b sur une autre zone d'engagement 4 de la pièce fonctionnelle 3'. Les deux embouts de montage 88, 89 fonctionnent en alternance, en correspondance avec le décalage de la plaque 77 sur le premier côté ou sur le second côté.

Sur cette seconde version de la tête de robot 1 illustrée sur les figures 12 à 15, les vérins (non illustrés) qui permettent d'actionner respectivement les deux embouts de montage 88, 89 en translation selon les axes respectifs X15, X16, servent également comme dispositif de compliance longitudinale 63, ceux-ci travaillant en compression lorsque les faces inférieures 90, 91 des embouts de montage 88, 89 prennent appui - en alternance - sur des faces supérieures 56 de zones d'engagement 4, ce dispositif de compliance longitudinale 63 permettant d'ajuster la position selon l'axe X15 ou X16 de l'embout de montage 88, 89 et ainsi d'ajuster la tête 10 du composant 2b - dont le corps 9 est placé dans l'orifice 92, 93 - par rapport à l'encoche 5 de la zone d'engagement 4.

Sur cette seconde version de la tête de robot 1 illustrée sur les figures 12 à 15, l'organe de montage 13 comprend également un dispositif de compliance latérale 71 permettant d'ajuster la position selon l'axe X17 des embouts de montage 88, 89 qui travaillent en alternance, pour que les têtes 10 des composants 2b emboîtés dans les orifices 92, 93 puissent se centrer convenablement vis-à-vis des encoches 5 des zones d'engagement 4 durant leur engagement dans ces encoche 5. Le dispositif de compensation latérale 71 comprend pour chacun des embouts de montage 88, 89, un organe de suspension 99, 100 agencé entre une pièce de support 101, 102 et l'embout de montage 88, 89, ladite pièce de support 101, 102 étant assujettie au piston 95 de vérin déplaçant ledit embout de montage 88, 89 selon l'axe X15, X16. Cet organe de suspension 99, 100, par exemple un ressort de rappel, est configuré pour travailler en compression et en extension dans le sens de l'axe X17, pour bien recentrer l'embout de montage 88, 89 vis à vis de l'encoche 5 lorsque la tête 10 du composant 2b commence à pénétrer dans l'encoche 5.

Des variantes de réalisation restent envisageables pour cette seconde version de la tête de robot 1, quant aux mises en oeuvre du dispositif de compensation longitudinal 63 et du dispositif de compensation latéral 71, lesquels pourraient avoir des configurations similaires à celles mises en oeuvre pour la première version décrite précédemment.

Sur cette seconde version de la tête de robot 1, deux embouts de montage 88, 89 sont prévus. Une variante de réalisation pourrait être envisagée sur le même principe, avec un seul embout de montage. Cette variante offrirait toutefois une cadence de montage de composants moins élevée. Une autre variante pourrait aussi être envisagée avec un seul embout de montage qui comprend deux orifices pour réception des corps 9 de deux composants 2 qui seront consécutivement extraits d'une plaque d'un tiroir s'apparentant à la plaque 77 du tiroir 78.

Sur cette seconde version de la tête de robot 1, un organe presseur semblable à l'organe presseur 26 décrit pour la première version de la tête de robot, pourra être prévu pour garantir le déplacement de la pluralité de composants 2 placée dans le rail de stockage 14, en direction de la sortie 16 dudit rail de stockage 14.

Le montage d'un composant 2 pourra être réalisé de la même manière sur une tête de montage 6, la face inférieure 52 de l'embout de montage 39 pour la première version de la tête de robot 1 ou la face inférieure 90, 91 de l'embout de montage 88, 89 pour la seconde version de la tête de robot 1, prenant dans ce cas appui sur la face supérieure 98 de la zone de réception 7 de la tête de montage 6 illustrée en figure 16.

La tête de robot 1 selon la première version ou la seconde version peut comprendre en complément une caméra 104 agencée en avant de ladite tête de robot 1, comme illustré sur les figures 1 et 4 à 15, c'est-à-dire en avant du ou des embouts de montage 39, 88, 89, cette caméra 104 permettant au robot 300 de contrôler le bon montage d'un composant 2 sur une zone d'engagement 4 ou 7 de la pièce 3. Cette caméra 104 permettra également de contrôler l'identification de la pièce fonctionnelle 3' et aussi de contrôler les positions des zones d'engagement 4 de la pièce fonctionnelle 3' afin d'apporter si besoin des corrections de trajectoire du robot 300.

## Revendications

1. Tête de robot (1) pour le montage de composants (2) du type agrafe sur une pièce (3), le composant (2) comprenant une tête (10) configurée pour être engagée dans une encoche (5, 8) d'une zone d'engagement (4, 7) de la pièce et un corps (9) configuré pour être engagé dans un support lors d'un agrafage ultérieur sur ce support, la tête (10) et le corps (9) du composant (2) s'étendant en longueur selon un premier axe, **caractérisée en ce que** la tête de robot (1) comprend un chargeur (12) de composants qui comprend un rail de stockage (14) configuré pour recevoir les têtes (10) d'une pluralité de composants (2) disposés l'un à la suite de l'autre, le chargeur (12) comprenant un tiroir (17) configuré pour extraire un à un les composants (2) du rail de stockage (14) et acheminer le composant extrait (2b) jusqu'à un organe de montage (13), l'organe de montage (13) comprenant une zone de réception (40, 92, 93) configurée pour recevoir ledit composant extrait (2b), ledit organe de montage (13) étant configuré pour pousser le composant extrait (2b) placé dans la zone de réception (40, 92, 93) lors d'un mouvement d'avance de la tête de robot (1) selon un second axe, jusqu'à ce que la tête (10) dudit composant extrait (2b) pénètre dans une encoche (5, 8) d'une zone d'engagement (4, 7) de la pièce (3), le second axe étant perpendiculaire au premier axe du composant extrait placé dans la zone de réception.

2. Tête de robot selon la revendication 1, dans laquelle l'organe de montage (13) comprend un embout de montage (39, 88, 89) qui comporte la zone de réception (40 , 92, 93) et qui est configuré pour prendre appui sur une zone d'engagement (4, 7) de la pièce (3), dans le sens d'un troisième axe parallèle au premier axe d'un composant extrait placé dans la zone de réception (40, 92, 93), durant la poussée dudit composant extrait (2b) engendrée par un mouvement d'avance de la tête de robot (1) selon le second axe et permettant à la tête (10) dudit composant extrait (2b) de pénétrer dans l'encoche (5, 8) de la zone d'engagement (4, 7).

3. Tête de robot (1) selon l'une quelconque des revendications 1 ou 2, dans laquelle l'organe de montage (13) comprend un dispositif de compensation longitudinale (63) configuré pour prendre appui sur une face supérieure (56, 98) d'une zone d'engagement (4, 7) d'une pièce (3) et ajuster la position selon un troisième axe, de la tête (10) d'un composant extrait (2b) placé dans la zone de réception (40, 92, 93) par rapport à une encoche (5, 8) de ladite zone d'engagement (4, 7) lors de l'engagement de la tête (10) du composant extrait (2b) dans cette encoche (5, 8), ledit troisième axe étant parallèle au premier axe du composant extrait (2b) placé dans la zone de réception (40, 92, 93).

4. Tête de robot (1) selon l'une quelconque des revendications 1 à 3, dans laquelle l'organe de montage (13) comprend un dispositif de compensation latérale (71) configuré pour ajuster la position selon un quatrième axe, de la tête (10) du composant extrait (2b) placé dans la zone de réception (40,92, 93) par rapport à une encoche (5, 8) d'une zone d'engagement (4, 7) de la pièce (3) durant l'engagement de la tête du (10) composant extrait (2b) dans cette encoche (5, 8), le quatrième axe étant perpendiculaire au premier axe du composant extrait placé dans la zone de réception (40, 92, 93) et au second axe.

5. Tête de robot (1) selon l'une quelconque des revendications 1 à 4, dans laquelle l'organe de montage (13) comprend un embout de montage (39) qui comporte la zone de réception (40) du composant extrait (2b), ladite zone de réception (40) étant constituée d'un rail de réception (41) de forme cintrée apte à recevoir la tête (10) d'un composant extrait (2b), le rail de réception (41) comprenant une entrée (42) par laquelle pénètre la tête (10) du composant extrait (2b) alimenté par le tiroir (17) et une sortie (43) apte à correspondre avec une encoche (5, 8) d'une zone d'engagement (4, 7) d'une pièce (3) lors du montage du composant extrait (2b) dans cette encoche (5, 8), l'embout de montage (39) comprenant un système de retenu du composant extrait au niveau de ladite sortie (43).

6. Tête de robot (1) selon la revendication 5, dans laquelle l'organe de montage (13) comprend un pousseur (46) et est configuré pour que l'embout de montage (39) et le pousseur (46) soient en mouvement relatif de sorte à pouvoir se rapprocher l'un de l'autre, le pousseur (46) appuyant sur le composant extrait (2b) placé dans le rail de réception (41) de sorte à l'extraire par la sortie (43) dudit rail de réception (41), lors d'un rapprochement de l'embout de montage (39) et du pousseur (46).

7. Tête de robot (1) selon la revendication 6, dans laquelle l'embout de montage (39) est monté en liaison glissière sur une structure (28) de la tête de robot (1) selon un cinquième axe parallèle au second axe, ledit embout de montage (39) comprenant un élément de butée (53, 54) apte à prendre appui sur une zone d'engagement (4, 7) d'une pièce (3) lors d'un déplacement de la tête de robot (1) selon le second axe, de sorte à translater selon le cinquième axe l'embout de montage (39) en direction du pousseur (46), l'organe de montage (13) comprenant un système de rappel agencé entre l'embout de montage (39) et la structure (28) et configuré pour travailler en compression de sorte à ramener l'embout de montage (39) dans une position initiale lorsque la butée cesse entre l'embout de montage (39) et la zone d'engagement (4, 7) de la pièce (3).

8. Tête de robot (1) selon la revendication 7, dans laquelle le pousseur (46) est monté en liaison glissière selon un sixième axe parallèle au cinquième axe, l'embout de montage (39) étant configuré pour venir en butée contre le pousseur (46) au-delà d'un déplacement dudit embout de montage (39) selon le cinquième axe lorsque l'élément de butée (53, 54) prend appui sur la zone d'engagement (4, 7) de la pièce (3), l'organe de montage (39) comprenant un troisième système de suspension agencé entre le pousseur (46) et la structure (28) et configuré pour travailler en compression lors d'un déplacement du pousseur (46) selon le sixième axe sous l'action de l'embout de montage (39) ou d'une anomalie d'engagement du composant extrait (2b) dans une encoche (5, 8) d'une zone d'engagement (4, 7) d'une pièce (3).

9. Tête de robot (1) selon l'une quelconque des revendications 5 à 8, dans laquelle le rail de stockage (14) s'étend en hauteur et comprend une entrée (15) en partie haute et une sortie (16) en partie basse, le tiroir (17) comprenant un rail de transfert (18) comprenant une entrée (19) communiquant avec la sortie (16) du rail de stockage (14) et une sortie (20) communiquant avec une entrée (42) de la zone de réception (40) sur l'embout de montage (39), le tiroir (17) comprenant une platine (21) juxtaposée au rail de transfert (18) et un actionneur configuré pour déplacer en va-et-vient la platine (21), ladite platine (21) étant configurée pour autoriser l'extraction d'un composant (2a) disposé en aval de la pluralité de composants (2), par la sortie (16) du rail de stockage (14), le rail de transfert (18) étant configuré pour acheminer le composant extrait (2b) jusque la zone de réception (40).

10. Tête de robot (1) selon l'une quelconque des revendication 1 à 4, dans laquelle l'organe de montage (13) comprend un embout de montage (88, 89) qui comporte un orifice (92, 93) constituant la zone de réception (40) du composant extrait (2b), l'orifice (92, 93) étant configuré pour recevoir par emboîtement le corps (9) du composant extrait (2b).

11. Tête de robot (1) selon la revendication 10, dans laquelle l'organe de montage (13) comprend deux embouts de montage (88, 89) configurés pour fonctionner en alternance.

12. Tête de robot (1) selon l'une quelconque des revendications 10 ou 11, dans laquelle le tiroir (78) comprend une plaque (77) munie d'une rainure (79, 80) en L présentant une entrée (81, 82) qui est apte à communiquer avec une sortie (16) du rail de stockage (14) pour engager un composant extrait (2b) sur la plaque (77) et une sortie (83, 84) permettant de dégager le composant extrait (2b) de la plaque (77) une fois le corps (9) du composant extrait (2b) emboîté dans l'orifice (92, 93) de l'embout de montage (88, 89), le tiroir (78) comprenant un actionneur configuré pour déplacer en va-et-vient la plaque (77) afin de positionner l'entrée (81, 82) de la rainure (79, 80) en L face à la sortie (16) du rail de stockage (14) et de décaler le composant extrait (2b) placé dans la rainure (79, 80) en L en-dessous de l'orifice (92, 93) de l'embout de montage (88, 89), l'organe de montage (13) comprenant un actionneur configuré pour descendre l'embout de montage (88, 89) lorsque le composant extrait (2b) placé dans la rainure (79, 80) en L est disposé sous l'orifice (92, 93), de sorte à emboîter le corps (9) du composant extrait (2b) dans l'orifice (92, 93), puis pour descendre l'embout de montage (88, 89) sous la plaque (77) une fois que ladite plaque (77) est dégagée et que l'entrée (81, 82) de la rainure (79, 80) en L communique avec la sortie (16) du rail de stockage (14).

13. Tête de robot (1) selon la revendication 12 rattachée à la revendication 11, dans laquelle la plaque (77) comprend deux rainures (79, 80) en L dont les entrées (81, 82) sont juxtaposées et les sorties (83, 84) sont disposées en opposition sur les côtés latéraux, l'entrée (81, 82) d'une rainure (79, 80) en L communiquant avec la sortie (16) du rail de stockage (14) pendant que le composant extrait (2b) placé dans l'autre rainure (79, 80) en L est placé sous l'orifice (92, 93) de l'embout de montage (88, 89) qui lui est associé, l'actionneur du tiroir (78) et les actionneurs des organes de montage (88, 89) étant configurés pour déplacer en alternance les rainures (79, 80) en L pour un chargement en alternance de composants (2b) sur les embouts de montage (88, 89).

14. Tête de robot (1) selon l'une quelconque des revendications 1 à 13, dans laquelle le rail de stockage (14) comprend une entrée (15) et une sortie (16), le chargeur comprenant un organe presseur (26) configuré pour pousser la pluralité de composants (2) vers la sortie (16) du rail de stockage (14).

15. Installation de montage (400) de composants (2) de type agrafe sur une pièce (3), laquelle comprend :
- un dispositif de distribution (500) en composants qui comprend rail de stockage (501) de composants (2) configuré pour recevoir les têtes (10) d'une pluralité de composants (2) disposés l'un à la suite de l'autre,
- un robot (300) qui comprend une tête de robot (1) selon l'une quelconque des revendications 1 à 14, le robot (1) étant configuré pour venir positionner une entrée (15) du rail de stockage (14) du chargeur (12) de composants (2) en correspondance avec une sortie (502) du rail de stockage (501) du dispositif de distribution (500), le dispositif de distribution (500) étant configuré pour permettre le transfert simultané de la pluralité de composants (2) du rail de stockage (501) dudit dispositif de distribution (500) vers le rail de stockage (14) du chargeur (13).
